# FASCICULE DE BREVET EUROPEEN

(11) **EP 3 750 811 B1**
(45) Date de publication et mention de la délivrance du brevet: **18.08.2021**
(21) Numéro de dépôt: 20166117.0
(22) Date de dépôt: 27.03.2020
(51) Int. Cl.: B64D 27/26

(54) **SYSTEME D'ATTACHE MOTEUR AVANT POUR UN MOTEUR D'AERONEF COMPORTANT UNE FIXATION DIRECTE ENTRE LE MAT REACTEUR ET LE MOTEUR**
VORDERES MOTORBEFESTIGUNGSSYSTEM FÜR EINEN LUFTFAHRZEUGMOTOR, DER EINE DIREKTE BEFESTIGUNG ZWISCHEN DEM TRIEBWERKSTRÄGER UND DEM MOTOR UMFASST
SYSTEM FOR FRONT ENGINE MOUNT FOR AN ENGINE OF AN AIRCRAFT COMPRISING A DIRECT ATTACHMENT BETWEEN THE REACTOR MAST AND THE ENGINE

(30) Priorité: 21.05.2019 FR 1905339
(43) Date de publication de la demande: 16.12.2020
(73) Titulaire: AIRBUS OPERATIONS (S.A.S.), 31060 Toulouse (FR)
(72) Inventeur: PUECH, Jacky, 31060 TOULOUSE Cedex 9 (FR); DUBOIS, Olivier, 31060 TOULOUSE Cedex 9 (FR); LANSIAUX, Rémi, 31060 TOULOUSE Cedex 9 (FR); DEFORET, Thomas, 31060 TOULOUSE Cedex 9 (FR)
(74) Mandataire: Sarraméa, Claude

(56) Documents cités:
- EP-A1- 1 281 615
- EP-A1- 2 436 601
- EP-A1- 2 754 612
- EP-A1- 3 483 069
- WO-A1-93/11041
- FR-A1- 3 071 820
- US-A1- 2014 183 298
- US-B1- 6 474 597

## Description

La présente invention concerne un système d'attache moteur avant pour un moteur d'aéronef, ainsi qu'un aéronef comportant au moins une telle attache moteur avant.

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est fixé au mât réacteur par l'intermédiaire d'un système d'attache moteur comprenant une attache moteur avant et une attache moteur arrière.

L'attache moteur avant comporte par exemple une poutre fixée à une face avant du mât réacteur et deux bielles fixées entre la poutre et un carter avant du moteur. Chaque bielle est équipée de rotules qui sont constituées de deux billes coupées et appairées.

Chaque bielle et la poutre définissent en combinaison un chemin primaire d'efforts entre le moteur et le mât réacteur pour supporter les charges du moteur dans des conditions normales de fonctionnement dudit moteur.

Une telle poutre est une pièce massive obtenue par usinage d'une pièce obtenue par forgeage. Le procédé pour obtenir cette poutre est relativement long et complexe.

Si une telle poutre est satisfaisante du point de vue de son utilisation, il est nécessaire de trouver une architecture différente pour faciliter la fabrication et la mise en œuvre du système d'attache moteur avant. Les documents US2014/183298, EP2754612, EP1281615 et WO93/11041, qui décrivent le préambule de la revendication 1, décrivent des systèmes d'attache moteur avant comportant une fixation directe entre le mât réacteur et le moteur.

Afin d'assurer une meilleure sécurité, les systèmes d'attaches moteur des documents susmentionnés comprennent des systèmes de redondances en cas de défaillance d'un des éléments du système d'attache moteur. Il existe un besoin de trouver un système de redondance alternatif à ceux décrits dans ces documents.

A cet effet, est proposé un système d'attache moteur avant pour un moteur d'un aéronef tel que revendiqué à la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une vue de côté d'un aéronef selon l'invention ;
- la figure 2 est une vue en perspective d'un système d'attache moteur avant selon l'invention ;
- la figure 3 est une vue en perspective éclatée du système d'attache moteur avant de la figure. 2 ; et
- la figure 4 est une vue en coupe d'un système de rotules au niveau d'un point de liaison.

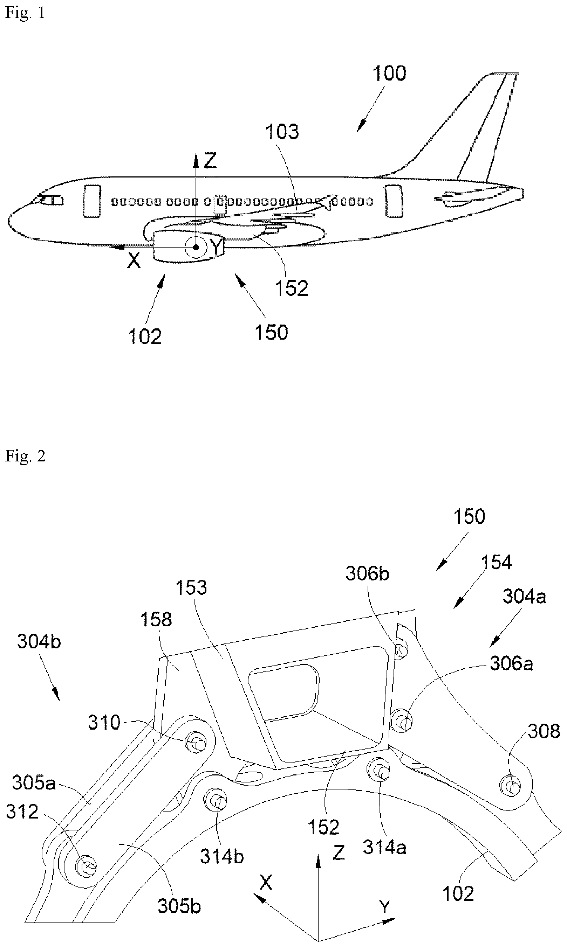

Dans la description qui suit, les termes relatifs à une position sont pris en référence à un aéronef en position d'avancement, c'est-à-dire comme il est représenté sur la figure 1.

La figure 1 montre un aéronef 100 qui présente un moteur 102, en particulier un turboréacteur.

Dans la description qui suit, et par convention, on appelle X la direction longitudinale du moteur 102 orientée positivement dans le sens d'avancement de l'aéronef 100, on appelle Y la direction transversale du moteur 102 qui est horizontale lorsque l'aéronef est au sol, et Z la direction verticale ou hauteur verticale lorsque l'aéronef est au sol, ces trois directions X, Y et Z étant orthogonales entre elles.

Dans le mode de réalisation de l'invention présenté sur la figure 1, l'aéronef 100 comporte un moteur 102 sous chaque aile 103, mais il est possible de prévoir plusieurs moteurs sous chaque aile 103.

Sous chaque aile 103 et pour chaque moteur 102, l'aéronef 100 présente un système d'attache moteur avant 150 qui est fixé à la structure de l'aile 103 et s'étend sous l'aile 103 et supporte la partie avant du moteur 102.

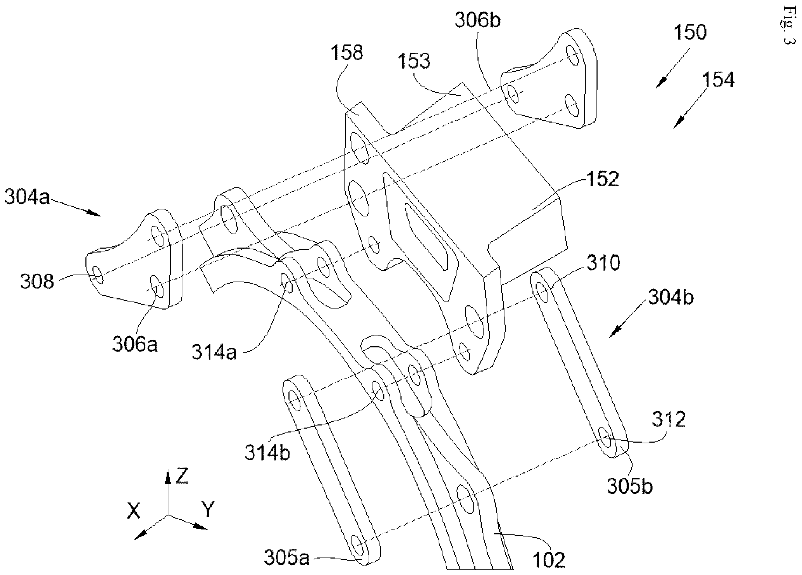

Comme le montrent les figures 2 et 3, le système d'attache moteur avant 150 comprend un mât réacteur 152 fixé à l'aile 103 et une attache moteur avant 154 fixée au mât réacteur 152 et à laquelle est fixée la partie avant du moteur 102.

De manière connue, le mât réacteur 152 prend par exemple la forme d'un caisson qui comporte entre autres au niveau de sa partie avant, une partie frontale 153 qui s'étend dans un plan sensiblement vertical.

L'attache moteur avant 154 comporte de part et d'autre d'un plan médian XZ, un système de bielles 304a-b où les bielles 305a-b sont fixées directement entre le mât réacteur 152 et le moteur 102.

Dans le mode de réalisation de l'invention présenté ici, la partie frontale 153 présente une paroi d'attache 158.

L'attache moteur avant 154 ne comporte ni poutre ni les éléments de visserie nécessaires à la fixation de la poutre, ce qui rend l'attache moteur avant 154 plus légère et plus facile à mettre en œuvre. Une telle installation permet en outre une amélioration des jeux entre les différents éléments.

Chaque système de bielles 304a-b comprend une bielle avant 305a et une bielle arrière 305b. Les deux bielles 305a-b sont parallèles l'une à l'autre et la bielle avant 305 est disposée à l'avant par rapport à la bielle arrière 305b selon la direction longitudinale X.

Chaque bielle 305a-b est dans un plan globalement parallèle à la paroi d'attache 158.

Chaque système de bielles 304a-b est fixé de manière articulée par au moins un premier point de liaison 306a-b, 310 à la paroi d'attache 158 et est fixé de manière articulée par au moins un deuxième point de liaison 308, 312 à une partie avant du moteur 102 qui est représentée ici par une partie de son carter avant.

Dans le mode de réalisation présenté ici, le premier système de bielles 304a est fixé par deux premiers points de liaison 306a-b à la paroi d'attache 158 et par un deuxième point de liaison 308 au moteur 102, et le deuxième système de bielles 304b est fixé par un premier point de liaison 310 à la paroi d'attache 158 et par un deuxième point de liaison 312 au moteur 102.

Pour chaque point de liaison 306a-b, 310, 308, 312, la liaison entre le système de bielles 304a-b et la paroi d'attache 158, respectivement le moteur 102, est réalisée par une chape, où chaque bielle 305a-b du système de bielles 304a-b constitue une paroi de la chape et où la paroi d'attache 158, respectivement le moteur 102, est disposée entre les deux bielles 305a-b, où un axe traverse un alésage de chaque bielle 305a-b et un alésage de la paroi d'attache 158, respectivement le moteur 102, où la paroi d'attache 158, respectivement le moteur 102, est montée sur l'axe par l'intermédiaire d'une liaison rotule.

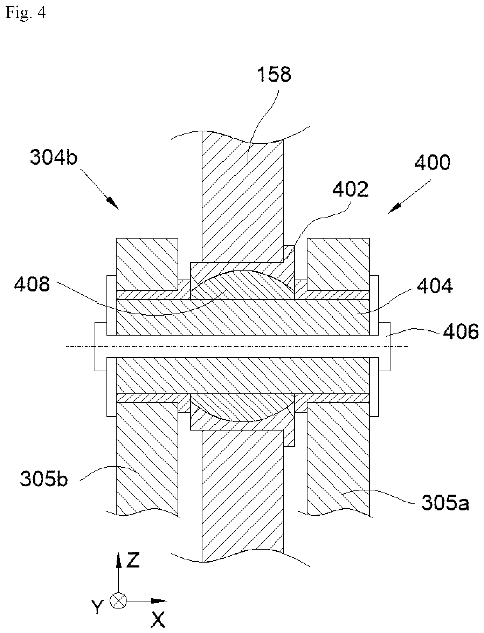

La figure 4 montre un système de rotules 400 au niveau du premier point de liaison 310 entre le système de bielles 304b et la paroi d'attache 158. Les autres points de liaison peuvent prendre la même forme, en particulier au niveau du moteur 102.

Le système de rotules 400 comprend une cage 402 qui est fixée, par exemple par vissage, à l'intérieur de l'alésage de la paroi d'attache 158, et l'axe 404 qui est emmanché et fixé dans l'alésage de la paroi d'attache 158 et dans les alésages des bielles 305a-b ici par l'intermédiaire de coussinets et d'un boulon 406 qui prend les bielles 305a-b en sandwich ici par l'intermédiaire de rondelles.

La cage 402 présente une surface intérieure sphérique et l'axe 404 porte une noix centrale 408 sphérique autour de laquelle la cage 402 est disposée. Ainsi, il y a une liberté de mouvement entre les bielles 305a-b et la paroi d'attache 158, la paroi d'attache 158 et la cage 402 pouvant pivoter autour de la portion centrale 408.

Un tel arrangement permet un comportement plus robuste en protégeant le logement de l'usure par frottement et assure un démontage plus facile en cas de besoin.

Ainsi, dans le mode de réalisation présenté ici, chaque premier point de liaison 306a-b, 310 entre la paroi d'attache 158 et un système de bielles 304a-b prend la forme d'une chape, où une paroi de ladite chape est constituée de la bielle avant 305a dudit système de bielles 304a-b, où l'autre paroi de ladite chape est constituée de la bielle arrière 305b dudit système de bielles 304a-b, où la paroi d'attache 158 est disposée entre les deux bielles 305a-b, et où un axe traverse un alésage de chaque bielle 305a-b et un alésage de la paroi d'attache 158.

De la même manière, dans le mode de réalisation présenté ici, chaque deuxième point de liaison 308, 312 entre le moteur 102 et un système de bielles 304a-b prend la forme d'une chape, où une paroi de ladite chape est constituée de la bielle avant 305a dudit système de bielles 304a-b, où l'autre paroi de ladite chape est constituée de la bielle arrière 305b dudit système de bielles 304a-b, où le moteur 102 est disposé entre les deux bielles 305a-b, et où un axe traverse un alésage de chaque bielle 305a-b et un alésage du moteur 102.

Chaque système de bielles 304a-b, la paroi d'attache 158, et la partie frontale 153 définissent en combinaison un chemin primaire d'efforts entre le moteur 102 et le mât réacteur 152 pour supporter les charges du moteur 102 dans des conditions normales de fonctionnement dudit moteur 102.

Selon l'invention, pour une meilleure sécurité, le système d'attache moteur avant 150 comporte, pour chaque système de bielles 304a-b, un point de liaison supplémentaire 314a-b. Les points de liaison supplémentaires 314a-b sont disposés de part et d'autre du plan médian XZ, et chacun assure une liaison supplémentaire entre le système d'attache moteur avant 150 et le moteur 102. Chaque point de liaison supplémentaire 314a-b prend la forme d'un point de fixation de sécurité en attente (dit « waiting fail-safe » en langue anglo-saxonne) qui compensera une défaillance du chemin primaire d'efforts, c'est-à-dire d'au moins une des bielles 305a-b. C'est-à-dire que lorsqu'un composant du chemin primaire d'efforts est endommagé, l'activation d'un point de fixation de sécurité en attente crée un chemin auxiliaire d'efforts entre le moteur 102 et le mât réacteur 152.

Chaque point de fixation de sécurité en attente 314a-b est constitué ici d'une chape réalisée dans le moteur 102 et d'un axe emmanché dans des alésages de ladite chape et qui traverse un alésage de la paroi d'attache 158 dont le diamètre est supérieur au diamètre de l'axe. Ainsi, en fonctionnement normal, il n'y a aucun contact entre l'axe et la paroi d'attache 158, et en cas de rupture de l'une des bielles 304a-b, le moteur 102 va se déplacer et l'axe vient alors en contact avec la paroi d'attache 158.

Pour chacune des chapes décrites ci-dessus, l'axe de la chape est globalement parallèle à la direction longitudinale X.

Le montage du moteur 102 s'effectue par un déplacement vertical vers le haut et la mise en place des axes de chapes horizontaux.

## Revendications

1. Système d'attache moteur avant (150) pour un moteur (102) d'un aéronef (100), le système d'attache moteur avant (150) comportant :
- un mât réacteur (152) comportant au niveau de sa partie avant une partie frontale (153) présentant une paroi d'attache (158), et
- une attache moteur avant (154) comportant de part et d'autre d'un plan médian, un système de bielles (304a-b),
où chaque système de bielles (304a-b) est fixé de manière articulée par au moins un premier point de liaison (306a-b, 310) à la paroi d'attache (158) et est destiné à être fixé de manière articulée par au moins un deuxième point de liaison (308, 312) à une partie avant du moteur (102), et où chaque système de bielles (304a-b) comprend une bielle avant (305a) et une bielle arrière (305b), où chaque premier point de liaison (306a-b, 310) entre la paroi d'attache (158) et un système de bielles (304a-b) prend la forme d'une chape, où une paroi de ladite chape est constituée de la bielle avant (305a) dudit système de bielles (304a-b), où une autre paroi de ladite chape est constituée de la bielle arrière (305b) dudit système de bielles (304a-b), où la paroi d'attache (158) est disposée entre les deux bielles (305a-b), et où un axe traverse un alésage de chaque bielle (305a-b) et un alésage de la paroi d'attache (158),
le système d'attache moteur avant (150) étant **caractérisé en ce qu'**il comporte pour chaque système de bielles (304a-b), un point de fixation de sécurité en attente (314a-b) activé en cas de défaillance d'un chemin primaire d'efforts et qui crée un chemin auxiliaire d'efforts entre le moteur (102) et le mât réacteur (152), **en ce que** chaque point de fixation de sécurité en attente (314a-b) est constitué d'une chape réalisée dans le moteur (102) et d'un axe emmanché dans des alésages de ladite chape et qui traverse un alésage de la paroi d'attache (158) dont le diamètre est supérieur au diamètre de l'axe.

2. Système d'attache moteur avant (150) selon la revendication 1, **caractérisé en ce que** la paroi d'attache (158) est montée sur l'axe par l'intermédiaire d'une liaison rotule.

3. Aéronef (100) comportant une structure, un moteur (102) et un système d'attache moteur avant (150) selon l'une des revendications précédentes, où le mât réacteur (152) est fixé à la structure, et où une partie avant du moteur (102) est fixée audit au moins un deuxième point de liaison (308, 312).

## Patentansprüche

1. Vorderes Motorbefestigungssystem (150) für einen Motor (102) eines Luftfahrzeugs (100), wobei das vordere Motorbefestigungssystem (150) Folgendes umfasst:
- einen Triebwerksträger (152), der im Bereich seines vorderen Teils einen Frontteil (153) umfasst, der eine Befestigungswand (158) aufweist, und
- eine vordere Motorbefestigung (154), die auf beiden Seiten einer Mittelebene ein Stangensystem (304a-b) umfasst,
wobei jedes Stangensystem (304a-b) durch mindestens einen ersten Verbindungspunkt (306a-b, 310) gelenkig an der Befestigungswand (158) befestigt ist und dazu bestimmt ist, durch mindestens einen zweiten Verbindungspunkt (308, 312) gelenkig an einem vorderen Teil des Motors (102) befestigt zu sein, und wobei jedes Stangensystem (304ab) eine vordere Stange (305a) und eine hintere Stange (305b) beinhaltet, wobei jeder erste Verbindungspunkt (306a-b, 310) zwischen der Befestigungswand (158) und einem Stangensystem (304a-b) die Form eines Gabelgelenks hat, wobei eine Wand des Gabelgelenks durch die vordere Stange (305a) des Stangensystems (304a-b) gebildet wird, wobei eine andere Wand des Gabelgelenks durch die hintere Stange (305b) des Stangensystems (304a-b) gebildet wird, wobei die Befestigungswand (158) zwischen den zwei Stangen (305a-b) angeordnet ist und wobei eine Achse durch eine Bohrung jeder Stange (305a-b) und durch eine Bohrung der Befestigungswand (158) verläuft,
wobei das vordere Motorbefestigungssystem (150) **dadurch gekennzeichnet ist, dass** es für jedes Stangensystem (304a-b) einen in Bereitschaft befindlichen Sicherheitsbefestigungspunkt (314a-b) umfasst, der im Fall eines Versagens eines primären Kräftepfads aktiviert wird und der einen Hilfskräftepfad zwischen dem Motor (102) und dem Triebwerksträger (152) herstellt, dass jeder in Bereitschaft befindliche Sicherheitsbefestigungspunkt (314a-b) aus einem in dem Motor (102) ausgeführten Gabelgelenk und einer Achse besteht, welche in Bohrungen des Gabelgelenks eingepasst ist und durch eine Bohrung der Befestigungswand (158), deren Durchmesser größer als der Durchmesser der Achse ist, verläuft.

2. Vorderes Motorbefestigungssystem (150) nach Anspruch 1, **dadurch gekennzeichnet, dass** die Befestigungswand (158) mit Hilfe einer Kugelgelenkverbindung an der Achse montiert ist.

3. Luftfahrzeug (100), das ein Tragwerk, einen Motor (102) und ein vorderes Motorbefestigungssystem (150) nach einem der vorhergehenden Ansprüche umfasst, wobei der Triebwerksträger (152) an dem Tragwerk befestigt ist und wobei ein vorderer Teil des Motors (102) an dem mindestens einen zweiten Verbindungspunkt (308, 312) befestigt ist.

## Claims

1. Front engine mount system (150) for an engine (102) of an aircraft (100), the front engine mount system (150) comprising:
- an engine pylon (152) comprising, in its front part, a frontal part (153) having a mount wall (158), and
- a front engine mount (154) comprising, on either side of a median plane, a system of connecting rods (304a-b),
where each system of connecting rods (304a-b) is attached in articulated fashion by at least one first connection point (306a-b, 310) to the mount wall (158) and is designed to be attached in articulated fashion by at least one second connection point (308, 312) to a front part of the engine (102), and where each system of connecting rods (304a-b) comprises a front connecting rod (305a) and a rear connecting rod (305b), where each first connection point (306a-b, 310) between the mount wall (158) and a system of connecting rods (304a-b) is in the form of a clevis, where one wall of said clevis consists of the front connecting rod (305a) of said system of connecting rods (304a-b), where another wall of said clevis consists of the rear connecting rod (305b) of said system of connecting rods (304a-b), where the mount wall (158) is arranged between the two connecting rods (305a-b), and where a pin passes through a bore of each connecting rod (305a-b) and a bore of the mount wall (158)
the front engine mount system (150) being **characterized in that** it comprises, for each system of connecting rods (304a-b), a waiting fail-safe attachment point (314a-b) that is activated in the event of failure of a primary load path, and that creates an auxiliary load path between the engine (102) and the engine pylon (152), **in that** each waiting fail-safe attachment point (314a-b) consists of a clevis created in the engine (102) and a pin snugly fitted into bores of said clevis and passing through a bore of the mount wall (158), whose diameter is greater than the diameter of the pin.

2. Front engine mount system (150) according to claim 1, **characterized in that** the mount wall (158) is mounted on the pin by means of a ball joint.

3. Aircraft (100) comprising a structure, an engine (102) and a front engine mount system (150) according to one of the preceding claims, the engine pylon (152) being attached to the structure, and a front part of the engine (102) being attached to said at least one second connection point (308, 312).
